(19) **Europäisches Patentamt**

**European Patent Office**

**Office européen des brevets**

(11) **EP 1 170 892 A2**

(12) **EUROPÄISCHE PATENTANMELDUNG**

(43) Veröffentlichungstag:
**09.01.2002 Patentblatt 2002/02**

(51) Int Cl.⁷: **H04J 3/16**

(21) Anmeldenummer: **01115124.8**

(22) Anmeldetag: **21.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.07.2000 DE 10032825**

(71) Anmelder: **SIEMENS AKTIENGESELLSCHAFT 80333 München (DE)**

(72) Erfinder: **Müller, Horst 82069 Hohenschäftlarn (DE)**

(54) **Verfahren zur Übertragung von digitalen optischen Signalen**

(57) Es werden Transportsignale (OTS1, OTS2, OTS3) für verschiedene Hierarchieebenen angegeben, wobei die Transportsignale der unteren Ebene in Transportsignale der oberen Ebene eingefügt werden können. Alle Transportsignale weisen den gleichen Pulsrahmen auf, der einen Optical Channel Overhead (OH1, OH2, (OH3) aufweist. Durch Vorwärtsfehlerkorrektur (FEC) wird die Fehlerrate wesentlich verringert.

Anstelle von Transportsignalen einer niedrigeren Hierarchie können auch die Tributary Signale direkt in die Pulsrahmen der Transportsignale einer höheren Hierarchie eingefügt werden. Die Frequenzanpassung erfolgt durch Stopfen.

Fig. 3

**Beschreibung**

Die Erfindung betrifft ein Verfahren zur Übertragung von digitalen optischen Signalen und Multiplex-Signalen mit unterschiedlichen Datenraten nach dem Oberbegriff des Patentanspruchs 1.

In optischen Netzen kann die Länge der Streckenabschnitte ohne Regeneratoren durch Maßnahmen auf der optischen Seite wie erhöhte Sendeleistung und Kompensation nicht-linearer Effekte vergrößert werden. Wesentlich kostengünstiger ist es jedoch eine erhöhte Fehlerrate zuzulassen und diese mittels Fehlerkorrektur wieder zu reduzieren. In der ITU-Empfehlung G975 ist eines der Verfahren zur Fehlerkorrektur (Forward Error Correction - FEC) beschrieben, das einen Blockcode verwendet und für Untersee-Kabelverbindungen vorgesehen ist. Die Korrekturinformation wird jeweils am Ende eines Übertragungsblockes in den Pulsrahmen eingefügt.

In den Standardisierungsgremien wird ein Verfahren diskutiert, bei dem zusätzlich zur Fehlerkorrektur ein Optical Channel Overhead, OH, dem Nutzsignal zugeordnet wird, um das Signal in optischen Netzen überwachen zu können. Dieses Verfahren ist auch als "Digital Wrapper" bekannt. Im Overhead des Pulsrahmens wird auch angegeben, welche Signale im Pulsrahmen übertragen werden. Im Overhead wird auch zusätzliche Information für Management- und Überwachungsaufgaben übertragen.

Das technische Problem besteht nun darin, ein Verfahren anzugeben, mit dem mehrere mit Optical Channel Overhead und Fehlerkorrektur versehene zueinander nicht synchrone Signale unterschiedlicher Datenformate und/ oder Datenraten zu Transportsignalen zusammengefasst werden können. Kurz, geeignete Datenformate und Transportraten für eine derartige "Optische Übertragungshierarchie" festzulegen.

Außerdem soll es möglich sein, auch andere Datenformate der Synchronen Hierarchien in ein Transportsignal höherer Ordnung einzufügen.

Dieses Problem wird durch ein in Anspruch 1 angegebenes Verfahren gelöst.

Vorteilhafte Weiterbildungen der Erfindung sind in den abhängigen Ansprüchen angegeben.

Der Vorteil der Erfindung liegt darin, daß in den einzelnen (Multiplexer-) Hierarchiestufen Multiplexsignale gebildet werden, die mit einem gemeinsamen Optical-Channel-Overhead und Fehlerkorrektur versehen als Transportsignal mit einer definierten Datenrate übertragen werden. Die Transportsignale sind jeweils zu Multiplex-Signalen einer höheren Hierarchieebene zusammenfaßbar. Außerdem ist es in den höheren Hierarchieebenen auch direkt möglich, die Tributary Signale (einer niedrigeren Hierarchie, z. B. SDH-Hierarchie) nach Bildung einer Optical-Unit-Group direkt einzufügen. Unter Tributary Signalen werden hier die hauptsächlich in das System eingespeisten bzw. ausgegebenen STM/SONET-Signale und ebenfalls weitere Datensignale bezeichnet.

Weitere Vorteile ergeben sich durch die Festlegung bestimmter Übertragungsraten. Hierdurch wird man von der Genauigkeit der Signalquelle unabhängig. Die Frequenzanpassung erfolgt durch stopfen.

Es ist zweckmäßig bitweises Stopfen vorzusehen, um größeren Jitter zu vermeiden. Aus Gründen der einfachen Realisierung wird Positiv-Stopfen vorgeschlagen. Prinzipiell ist jedoch auch Positiv-0-Negativ-Stopfen, auch byteweises Stopfen, möglich. Die vorteilhafte Ausgestaltung der Transportsignale, insbesondere der Pulsrahmen, wird nachstehend beschrieben.

Die Erfindung wird anhand eines Ausführungsbeispiels näher beschrieben.

Es zeigen

Figur 1    das Zusammenfassen von Nutzsignalen mit und ohne Optical-Channel-Overhead und Korrekturinformation zu einem optischen Transportsignal,

Figur 2    zeigt eine Multiplexeinrichtung für drei Hierarchieebenen und deren Verknüpfung,

Figur 3    zeigt Funktionseinheiten der "Optical Channel Multiplexer",

Figur 4    zeigt den Pulsrahmen eines Transportsignals der ersten Hierarchieebene,

Figur 5    den zulässigen Toleranzbereich des Transportsignals, Figur 6 den Pulsrahmen des Transportsignals der zweiten Hierarchieebene mit Belegung mit vier STM-16- Signalen,

Figur 7    denselben Pulsrahmen bei Belegung mit einem STM-64- Signal,

Figur 8    die zulässigen Toleranzbereiche des Transportsignals der zweiten Hierarchieebene,

Figur 9    den Pulsrahmen für das Transportsignal der dritten Hierarchieebene bei Belegung mit vier STM-64 Signalen,

Figur 10    den Pulsrahmen des Transportsignals der dritten Hierarchieebene bei Belegung mit 16 Transportsignalen der ersten Hierarchieebene oder 16 STM-16-Signalen,

Figur 11    den Pulsrahmen des Transportsignals bei Belegung mit einem STM-256-Signal und

Figur 12    die zulässige Toleranz des Transportsignals der dritten Ebene bei unterschiedlichen Belegungen.

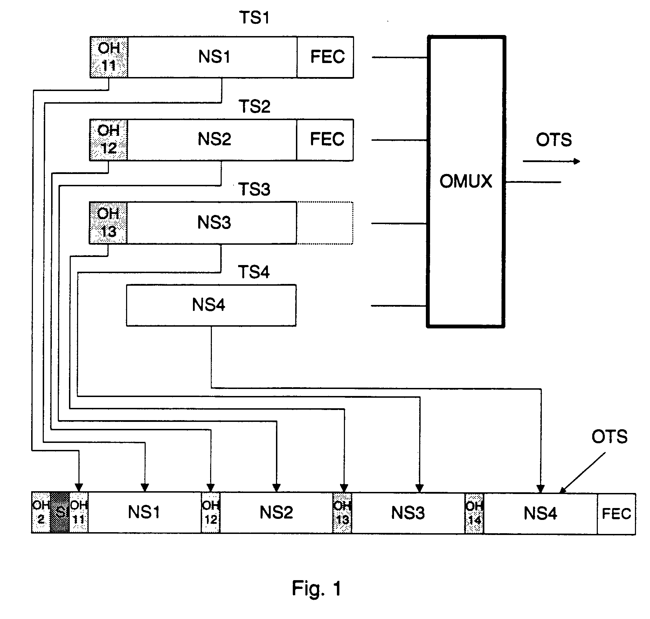

**Figur 1** zeigt eine prinzipielle Möglichkeit zur Bildung eines Multiplex-Signals aus 4 Tributary-Signalen TS1 - TS4, von denen zwei jeweils einen Overhead OH11, OH12, Nutzsignale NS1 und NS2 und FEC-Korrekturinformation FEC, eines einen Overhead OH13 und ein Nutzsignal NS3 enthält und ein viertes nur aus einem Nutzsignal NS4 besteht. Das vierte Nutzsignal NS4 ist beispielsweise ein Transportmodul STM-N der Synchronen Digitalen Hierarchie (dessen Overhead als Teil des Nutzsignals angesehen wird). Vor dem Zeitmultiplexen dieser vier Tributary/Basis-Signale TS1 - TS4 im optischen Multiplexer OMUX wird - soweit vorhanden - zunächst die Fehlerkorrektur durchgeführt. In den Pulsrahmen des Multiplexsignals, des optischen Transportsignals OTS (auch als Optical Transport Unit OTU bezeichnet), wird bei den ersten beiden Signalen TS1 und TS2 nur der zugehörige Optical-Channel-Overhead OH11 und das Nutzsignal NS1 bzw. der Overhead OH12 und das Nutzsignal NS2 übernommen. Das Tributary-Signal TS3 wird komplett übernommen, und beim Tributary-Signal TS4 wird ein Overhead OH14 generiert und anschließend das Nutzsignal NS4 übernommen.

Da die Datenart des optischen Transportsignals festgelegt ist und die Tributary-Signale weder untereinander noch zum Transportsignal synchron sind, muß eine Frequenzanpassung mit Hilfe von Stopfinformation SI erfolgen. Zusätzlich wird ein Overhead OH2 für das optische Transportsignal OTS gebildet, der den übrigen Daten vorangestellt wird und Steuer- und Ü-berwachungsinformationen enthält. Dem Overhead OH2 kann auch die Zusammensetzung des Transportsignals OTS entnommen werden, d.h. die Art der verschiedenen eingefügten Transport-oder Tributary Signale. Diese Information kann auch von einem Management-System dem Empfangsterminal mitgeteilt werden.

Zur Realisierung der dargestellten Struktur, bei der die Tributary-Signale aneinandergereiht werden, sind größere Zwischenspeicher notwendig, so daß diese für eine Realisierung wenig geeignet ist.

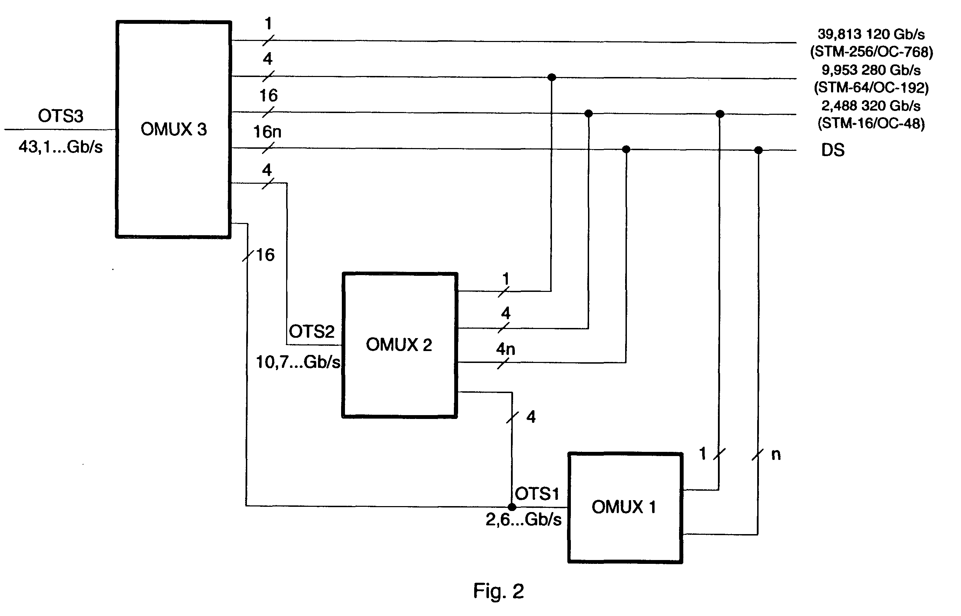

In **Figur 2** ist das erfinderische Multiplexer-Schema dargestellt. Der erste optische Multiplexer OMUX1 kann bis zu 16 mal und der zweite optische Multiplexer OMUX2 kann bis zu 4 mal vorhanden sein, um ein optisches Transportsignal OTS3 zu erzeugen.

Dem optischen Multiplexer OMUX1 der ersten Hierarchieebene wird beispielsweise als Tributary-Signal (Basissignal) ein STM-16 Signal der Synchronen Digitalen Hierarchie oder ein entsprechendes Signal OC-48 der SONET-Hierarchie zugeführt. Anstelle eines Tributary-Signals STM-16 kann der optische Multiplexer OMUX1 auch n (n= 2, 3, 4, ...) Datensignale DS mit niedrigerer Datenrate zunächst zu einem Multiplex-Datensignal MDS und dann zum Transportsignal OTS1 zusammenfassen.

Der optische Multiplexer OMUX2 der zweiten Hierarchieebene kann aus einem Tributary Signal STM-64/OC-192 oder vier Tributary Signalen STM-16/OC-48 bzw. vier Transportsignalen OTS1 oder 4n (n = 2, 3, 4, ...) Datensignalen DS ein Transportsignal OTS2 generieren. Eine Mischung von optischen Transportsignalen OTS1, Tributary Signalen STM-16/OC-48 und Multiplex-Datensignalen MDS ist ebenfalls möglich.

Bis zu vier dieser Multiplexer OMUX2 können wiederum vorhanden sein, um vier Transportsignale OTS2 der zweiten Hierarchieebene zu generieren, die zum Transportsignal OTS3 zusammengefasst werden, wenn in der dritten Hierarchieebene keine Tributary-Signale direkt eingefügt werden.

Der optische Multiplexer OMUX3 der dritten Hierarchieebene kann aus einem Tributary Signal STM-256/OC-768 oder vier Tributary Signalen STM-64/OC-192 bzw. vier optischen Transportsignalen OTS2 oder 16 Tributary Signalen STM-16/OC-48 bzw. 16 Transportsignalen OTS1 bzw. 16n (n = 2, 3, 4, ...) Datensignalen DS ein Transportsignal OTS3 generieren.

Das Transportsignal OTS3 kann ebenso eine Mischung der Transportsignale OTS1 und OTS2 und von Tributary Signalen und Datensignalen enthalten. Das Transportsignal OTS3 kann wiederum auch eine Mischung Transportsignalen der niedrigeren Hierarchieebenen, von Tributary Signalen und von Datensignalen enthalten.

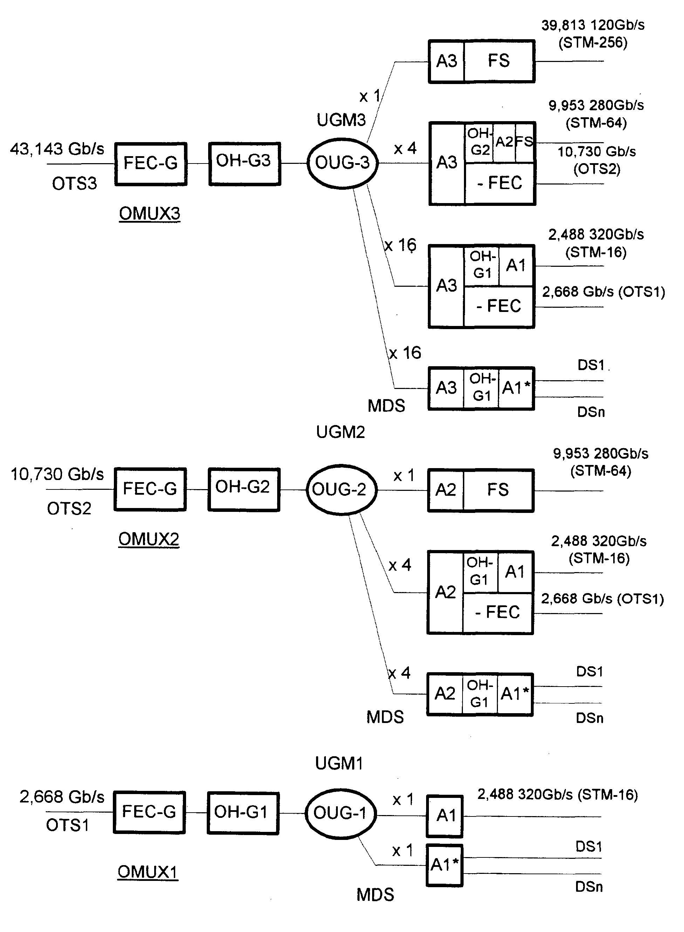

In **Figur 3** sind die Funktionsblöcke der optischen Übertragungshierarchie (Optical Transport Hierarchie) für die in Figur 2 gezeigten "Optical Channel Multiplexer" dargestellt. Der Multiplexer OMUX1 enthält eine Taktanpassung A1, der ein STM16-Signal zugeführt wird, das auf das optische Transportsignal OTS1 synchronisiert wird. Anstelle dieses STM-16-Signals können mehrere Datensignale DS1 bis DSn übertragen werden, die in einem ersten Unit-Group-Multiplexer UGM1 zu einer ersten Optical Unit Group OUG-1 zusammengefasst in den Pulsrahmen eingefügt werden. In einem Optical Channel Generator OH1-G1 wird der Optical Channel Overhead OH1 erzeugt Dieser kann auch Information über den Inhalt der Optical Unit Group enthalten. Durch eine FEC-Codier-Einrichtung FEC-G wird die Fehlerkorrektur-Information FEC hinzugefügt. Damit ist das optische Transportsignal OTS1 vollständig generiert. Nach einer nicht dargestellten elektro-optischen Wandlung kann dies über entsprechende Übertragungssysteme ausgesendet werden.

Wenn anstelle des STM16-Signals n Datensignale DS ("Client Signale") zunächst zu einem Multiplex-Datensignal und dann zu einer Optical Unit Group OUG-1 zusammengefaßt werden, ist eine Variante A1* der Frequenzanpassung für jedes Datensignal DS1 bis DSn erforderlich.

Der Multiplexer OMUX2 generiert, wie bereits bei Figur 2 erläutert, das optische Transportsignal OTS2, das eine Datenrate von 10,730Gb/s aufweist. Dieses Transportsignal kann vier Transportsignale OTS1 enthalten, die entsprechend den Tributary Signalen TS1 und TS2 nach Figur 1 - ohne FEC-Korrekturinformation - nach Durchlaufen der Frequenzanpassung A2 zu einer zweiten Optical Unit Group OUG-2 zusammengefasst werden. Ebenso können vier Signale STM-16 nach den Frequenzanpassungen A1 und A2 zu dieser Optical Unit Group zusammengefasst werden, der ein Optical Channel Overhead OH2 hinzugefügt wird.

Ebenso ist es möglich vier Multiplex-Datensignale MDS nach Frequenzanpassungen A1*, A2 einer Optical Unit Group zusammenzufassen. Ebenso kann auch ein STM-64 Signal nach einer Frequenzanpassung A2 eine Optical Unit Group OUG-2 bilden. Diese wird von einem Optical Channel Overhead-Generator OH-G2 mit einem Optical Channel Overhead OH2 versehen und anschießend wird in einer FEC-Codiereinrichtung FEC-G Korrekturinformation FEC hinzugefügt. Das komplette zweite optische Transportsignal OTS2 kann über eine 10 Gb/s-Strecke ausgesendet werden.

Der dritte Multiplexer OMUX3 kann wiederum in entsprechender Weise ein STM-256-Signal, bis zu 4 STM-64 Signale oder 4 OTS2-Signale oder bis zu 16 STM-16 Signale bzw. OTS1 Signale oder bis zu 16n Datensignale DS bzw. eine Mischung der Signale übertragen. Die Taktanpassung A3 erfolgt in entsprechender Weise. Anstelle der SDH-Signale können jeweils die entsprechenden SONET-Signale übertragen werden.

Die Figuren 2 und 3 sind schematisch zu betrachten. Falls ein Signal mehrere Frequenzanpassungen A durchläuft, kann eine der Frequenzanpassungen auch nur aus "fester Stopfinformation" (Fixed Stuff) bestehen. Ebenso wird das Multiplexschema zum Separieren von einzelnen Signalen in umgekehrter Reihenfolge durchgeführt, wobei einzelne Schritte unterbleiben können.

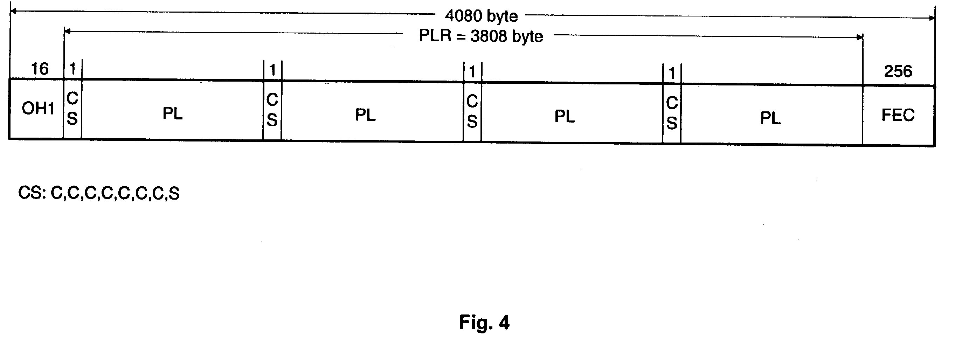

Nun sollen das Mapping (Einfügen) der Tributary Signale und Transportsignale sowie deren Frequenzanpassung näher erläutert werden. In **Figur 4** ist dargestellt, wie ein STM-16-Signal (OC-48-Signal der SONET-Hierarchie) zu einem Transportsignal OTS1 ergänzt wird. Um die Bitrate des Tributary Signals STM-16 an die Bitrate des Transportsignals OTS1 anzupassen, wird ein Positiv-Stopfverfahren vorgeschlagen, das sich durch besondere Einfachheit auszeichnet und zur Frequenzanpassung völlig ausreicht. Prinzipiell kann jedes Stopfverfahren angewendet werden. Die Stopfinformation wird in Form von Stopfbytes CS zumindest annähernd gleichmäßig im Pulsrahmen verteilt. Entsprechend Figur 4 ist aus Gründen der einfacheren Verarbeitbarkeit die Payload PLR = 3808Bytes des insgesamt 4080 Bytes umfassenden Pulsrahmens in vier gleiche Teile aufgeteilt, denen jeweils ein Stopfbyte CS vorangestellt ist, das 7 Bits Stopfkontrollinformation C und ein Stopfbit S enthält. Die Stopfkontrollinformation C gibt an, ob das Stopfbit S Information oder keine Information beinhaltet. Für die Stopfinformation werden zwei Binärkombinationen mit möglichst großem Hammingabstand gewählt, um einen größtmöglichen Schutz gegen Störungen zu haben. Sind die Stopfinformationbits C z.B. mit 0000000 belegt, bedeutet dies, daß das Stopfbit ein Stopfbit ist, während bei einer Belegung mit 7 logischen 1 das Stopfbit ein Informationsbit ist. Bei gestörten Stopfinformationbits wird eine Mehrheitsentscheidung gefällt.

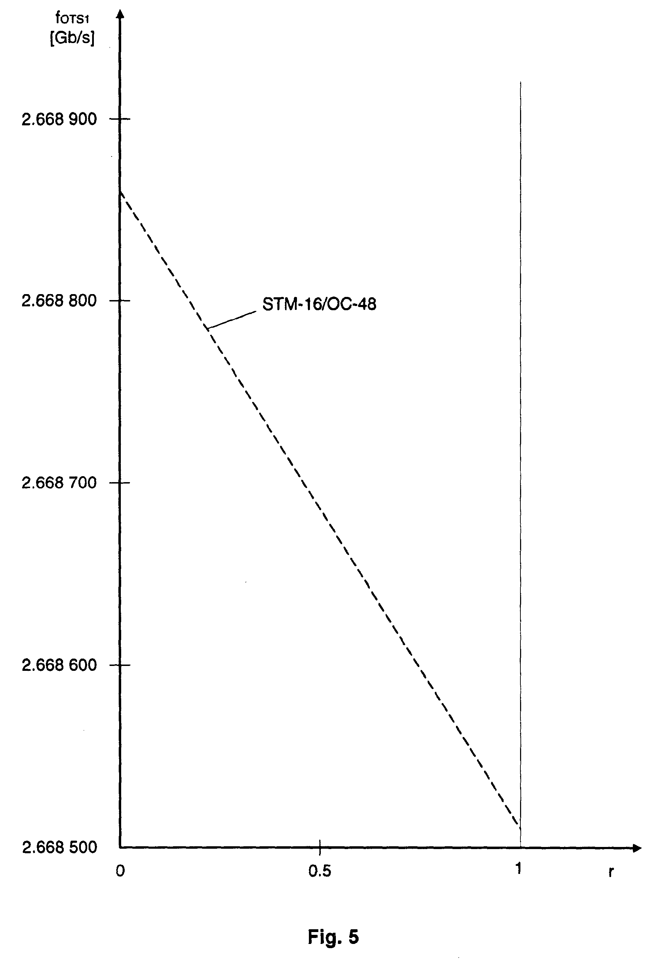

**Figur 5** zeigt die Abhängigkeit der Datenrate $f_{OTS1}$ des Transportsignals OTS1 von der Stopfrate r, wenn ein STM-16/OC-48-Signal eingefügt wird. Hieraus ist der zulässige Frequenzbereich des optischen Transportsignals bzw. des einzufügenden Signals zu ermitteln. Wird angenommen, daß die Frequenz des STM-16-Signals exakt stimmt und keine Informationsbits als Stopfbits übertragen werden, ergibt sich die höchste zulässige Datenrate für das optische Transportsignal OTS1. Bei der niedrigst zulässigen Datenrate wird im Stopfbyte ständig ein Informationsbit übertragen, was einer Stopfrate 1 entspricht

In einem Pulsrahmen werden ein Nutzsignal

NS = 951 byte x 4 x 8 + 4r = (30.432 + 4r) bit_übertragen.

Die Datenrate des STM16-Signals beträgt 2,488320 Gbit/s. Da die Übertragungsdatenraten im gleichen Verhältnis wie die Anzahl der übertragenen Bits stehen, ergibt sich somit für das Transportsignal eine Übertragungsrate von

$$f_{OTS1} = 2{,}488\ 320\ \text{Gbit/s} \times 4080 \times 8\ \text{bit}/(30432 + 4r)\ \text{bit} \tag{1}$$

Die entsprechende Gerade ist aus Figur 5 bekannt. Bei einer mittleren Datenrate von 2,66866855 Gbit/s kann die maximale Frequenzabweichung des STM16-Signals somit betragen:

$$(2)\ \Delta_{fOTS1} = \pm 2\ \text{bit}/\ (30\ 432 + 2)\ \text{bit} = \pm 65{,}7\ \text{ppm}. \tag{2}$$

Dies ist weit höher als die für SDH-Signale zulässige Toleranz von 4,6 ppm oder für SONET-Signale zulässige Toleranz von 20 ppm.

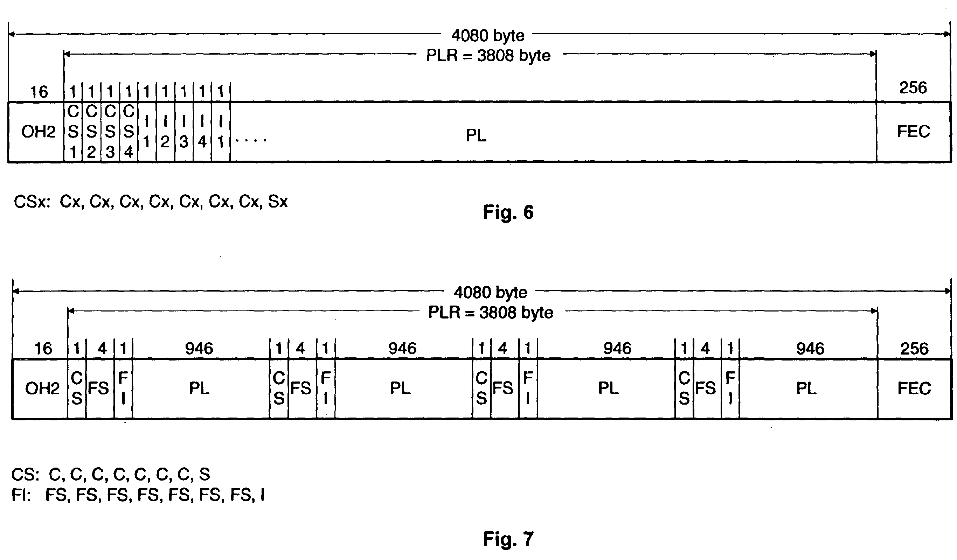

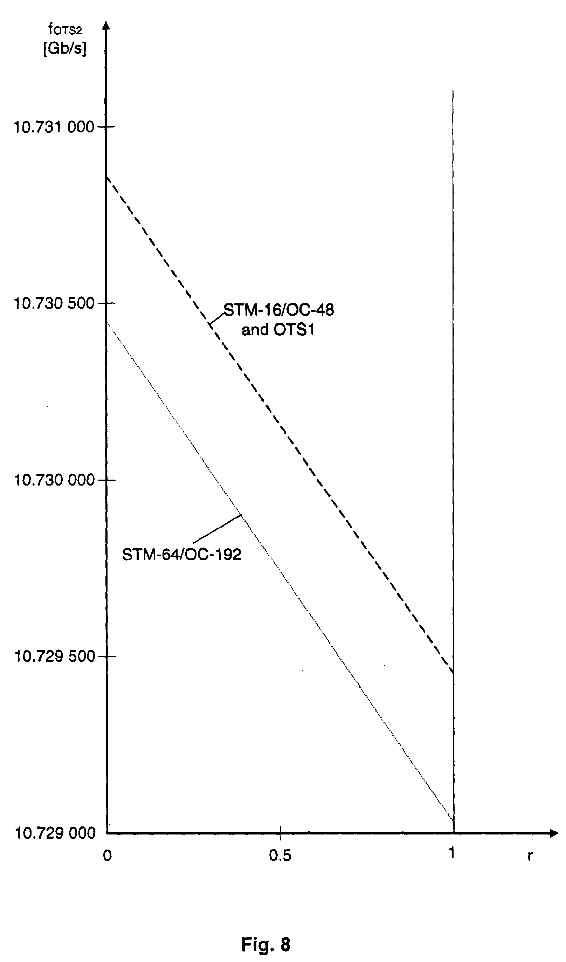

In **Figur 6** ist die Rahmenstruktur eines Transportsignals OTS2 bei Belegung mit 4 STM-16/OC-48-Signalen dargestellt. Die Gesamtlänge des Rahmens und die Payload stimmen mit dem Pulsrahmen des ersten Transportsignals überein. Da vier Tributary Signale STM-16 durch byteweises Verschachteln eingefügt werden, können die Stopfbytes an beliebiger Stelle angeordnet werden. Jedes Stopfbyte CS1, CS2,... enthält jeweils sieben Stopfinformationbits C und ein Stopfbit S. Es ergibt sich die in **Figur 8** dargestellte Abhängigkeit der Übertragungsdbitrate $f_{OTS2}$ von der Stopfrate r:

$$f_{OTS2} = f_{OTS1} \times 3824 \times 4080 \times 8/4080 \times (3804 \times 8/4 + r) \tag{4}$$

Bei einer Übertragungsbitrate f = 2,668685 Gbit/s ergibt sich ein Toleranzbereich von

$$\Delta f_{OTS2} = \pm 0{,}5 \text{bit}/ (3804 \times 8/4 + 0{,}5) \text{bit} = \pm 65{,}7 \text{ ppm}. \tag{5}$$

Die in **Figur 8** gestrichelt dargestellte Funktion gilt für die Signale STM-16/OC-48 und OTS1.

Entsprechend dem Funktionsdiagramm nach **Figur 3** kann zunächst eine Anpassung der STM-16-Signale an die Sollbitrate des ersten Transportsignals bzw. des zweiten Transportsignals OTS2 in der Frequenzanpassung A1 vor den Multiplexen der Signale vorgenommen werden, um anschließend noch eine Frequenzanpassung A2 an das zweite Transportsignal OTS2 durchzuführen. Es reicht jedoch auch eine einzige Frequenzanpassung an das Transportsignal aus.

In **Figur 7** ist das Einfügen eines STM-64/OC-192-Signals in den Pulsrahmen des Transportsignals OTS2 dargestellt. Der Umfang des Pulsrahmen ist wiederum gleichgeblieben. Um eine möglichst genaue Voranpassung der Datenraten zu erreichen werden vier Gruppen mit jeweils 4 x 8 + 7 = 39 bit fester Stopfinformation (Fixed Stuff) FS und FI eingefügt, die annähernd gleich verteilt werden. Außerdem sind vier ebenfalls gleich verteilte Stopfbytes CS vorgesehen, die wieder 7 Stopfinformationbits und ein Stopfbit enthalten. Damit ergibt sich eine Übertragungsbitrate $f_{OTS2}$ in Abhängigkeit von der Stopfrate r

$$f_{OTS2} = 9{,}953280 \text{Gbit/s} \times 4080 \times 8 \text{ bit}/ (30276 + 4r) \text{ bit} \tag{6}$$

Die entsprechende Gerade ist in Figur 8 durchgezogen dargestellt.
Die Frequenzabweichung des Transportsignals vom Tributary-Signal darf (9) damit betragen:

$$\Delta f_{OTS2} = \pm 2 \text{ bit}/ (30276 + 2) \text{ bit} = \pm 66 \text{ ppm}. \tag{7}$$

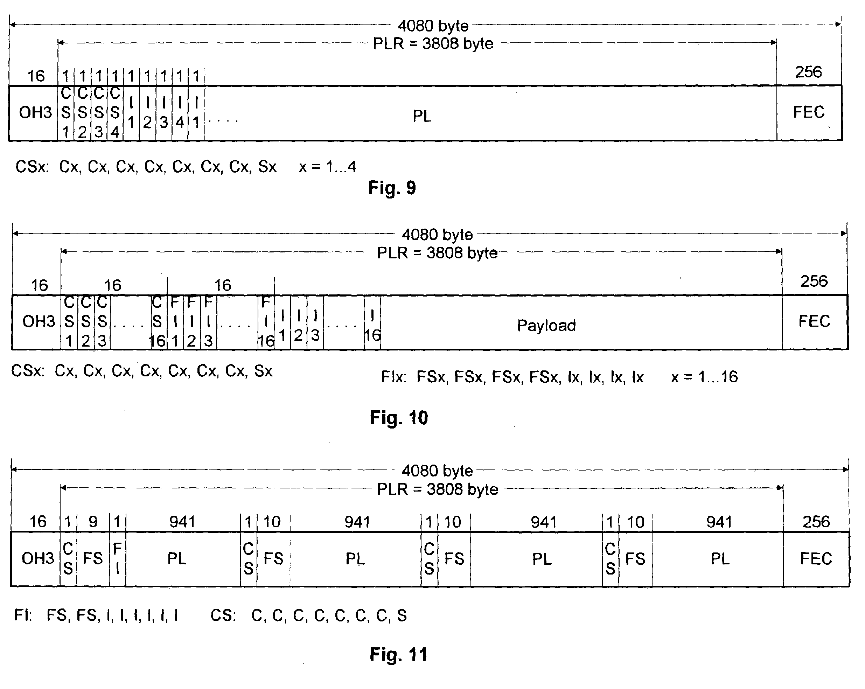

In **Figur 9** ist der Pulsrahmen nach Einfügen von 4 Transportsignalen OTS2 oder vier STM-64/OC-192-Signalen in den Pulsrahmen eines Transportsignals OTS3 dargestellt. Die Signale werden Byteweise verschachtelt. Für jedes Tributary/Basissignal ist ein Stopfbyte CS mit sieben Stopfinformationbits Cx und einem Stopfbit Sx vorgesehen. Die Datenrate des dritten Transportsignals beträgt:

$$f_{OTS3} = f_{OTS2} \times 3824 \times 4080 \times 8/4080 (38004 \times 8/4 + r) \tag{8}$$

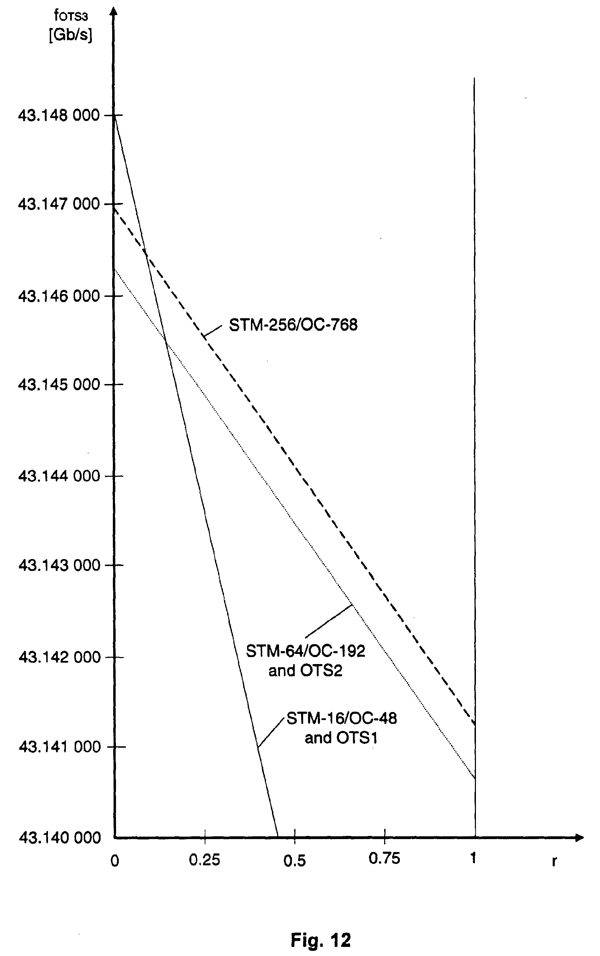

Dabei wurde für das Transportsignal OTS2 eine Bitrate $f_{OTS2}$ = 10,730 158 Gbit/s angenommen. Die entsprechende Gerade ist in Figur 12 durchgezogen dargestellt. Die zulässige Frequenzabweichung des Transportsignals vom Tributary-Signal beträgt:

$$\Delta f_{OTS2} = \pm 0{,}5 \text{ bit}/ (3804 \times 8/4 + 0{,}5) \text{ bit} = \pm 65{,}7 \text{ ppm}. \tag{9}$$

In **Figur 10** ist der Pulsrahmen für 16 eingefügte Transportsignale OTS1 oder 16 STM-16/OC-48-Signale dargestellt. Die Signale werden wieder byteweise verschachtelt.
Die erste Taktanpassung erfolgt danach durch Einfügen von fester Stopfinformation FI. Die Bytes FI1, FI2, FI3, ... enthalten jeweils vier feste Stopfbits FSx und vier Informationsbits Ix. Die Anpassung durch Stopfen erfolgt mit Hilfe der Stopfbytes CS1, CS2, CS3,..., die wiederum 7 Stopfinformationbits Cx und ein Stopfbit Sx enthalten. Die Datenrate des dritten Transportsignals beträgt:

$$f_{OTS3} = f_{OTS1} \times 3824 \times 4080 \times 8/4080 (3792 \times 8/16 - 4 + r) \tag{10}$$

Dies entspricht der durchgezogenen Linie in Figur 12.

Wenn für die Datenrate für das erste Transportsignal $f_{OS1}$ = 2,668685 Gbit/s angenommen wird, beträgt die

zulässige Abweichung

$$\Delta f_{OTS3} = \pm 0{,}5\text{bit}/\ (3792 \times 8/16 - 4 + 0{,}5)\text{bit} = \pm 264 \text{ ppm}. \tag{11}$$

Die feste Stopfinformation und die Stopfbytes können beliebig verteilt sein.

**Figur 11** zeigt das Einfügen eines STM-256/OC-768-Signal in den Pulsrahmen des Transportsignals OTS3. Eine näherungsweise Angleichung der Übertragungsbitraten erfolgt wieder durch feste Stopfinformation. Die Bytes FS enthalten hier 8 Stopfbits F und die Bytes FI jeweils zwei feste Stopfbits und sechs Informationsbits. Es sind 4 Stopfbytes CS vorgesehen, um die exakte Frequenzanpassung zu ermöglichen. Bei vier Stopfbytes CS, die jeweils wieder sieben Stopfinformationbits und ein Stopfbit enthalten, ergibt sich die gestrichelte Kennlinie in Figur 12 für die zulässigen Frequenzabweichungen. Die Anordnung der Stopfbytes CS und der Stopfinformation FS und FI kann weitgehend frei erfolgen.

In Abhängigkeit von der Stopfrate ergibt sich für das Transportsignal OTS3 eine Datenrate

$$f_{OTS3} = 39{,}813\ 120 \text{ Gbit/s} \times 4080 \times 8\text{bit}/\ (30118 + 4r) \text{ bit} \tag{12}$$

Diese Gerade ist in Figur 12 gestrichelt dargestellt.

Die zulässige Frequenzabweichung des Transportsignals vom Tributary-Signal beträgt:

$$\Delta f_{OTS3} = \pm 2 \text{ bit}/\ (30118 + 2) \text{ bit} = \pm 66 \text{ ppm}. \tag{13}$$

Mehrere dieser Pulsrahmen mit 4080 byte können in an sich bekannter Weise zu einem Überpulsrahmen zusammengefaßt werden. Dieser ermöglicht die Übertragung von mehr Overhead-Information.

**Patentansprüche**

1.  Verfahren zur Übertragung von digitalen optischen Signalen (DS, STM-16/OC-48, STM-64/OC-192, STM-256/OC-768) mit unterschiedlicher Datenraten mittels Transportsignalen (OTS1, OTS2, OTS3), die einen einheitlichen Pulsrahmen mit einer Payload (PL), einen Optical Channel Overhead (OH1, OH2, OH3) und FEC-Korrekturinformationen (FEC) aufweisen,
    **dadurch gekennzeichnet,**

    **daß** ein erstes optisches Transportsignal (OTS1) einer ersten Hierarchieebene gebildet wird, indem ein Tributary-Signal (STM-16/OC-48) in eine Payload (PL) eines Pulsrahmens (PR) eingefügt wird,
    **daß** hierbei eine Frequenzanpassung (A1) erfolgt und ein Optical-Channel-Overhead (OH1) und FEC-Korrekturinformation (FEC) hinzugefügt werden;
    **daß** ein zweites optisches Transportsignal (OTS2) einer zweiten Hierarchieebene gebildet wird, wobei zunächst eine Optical Unit Group (OUG-2) aus vier optischen Transportsignalen (OTS1) ohne deren FEC-Korrekturinformation (FEC) und/oder aus vollständigen Tributary Signalen (STM-16/OC-48) der ersten Hierarchiestufe oder einem Tributary-Signal (STM-64/OC-192) der zweiten Hierarchiestufe gebildet wird,
    **daß** eine Frequenzanpassung (A1, A2) zwischen den Transportsignalen (OTS1) der ersten Hierarchiestufe und/oder den Tributary-Signalen (STM-16/OC-48, STM-48/OC-192) und dem zweiten Transportsignal (OTS2) erfolgt,
    **daß** ein Optical-Channel-Overhead (OH2) hinzugefügt wird und
    **daß** eine FEC-Codierung durchgeführt wird;
    **daß** ein drittes Transportsignal (OTS3) einer dritten Hierarchieebene gebildet wird,
    wobei zunächst eine dritte Optical Unit Group (OUG-3) aus 16 Transportsignalen (OTS1) ohne deren Overhead (OH1) und/oder Tributary-Signalen (STM-16/OC-48) der ersten Hierarchiestufe
    oder aus 4 Transportsignalen (OTS2) ohne deren Overhead (OH1) und/oder 4 Tributary-Signalen (STM-64/OC-192) der zweiten Hierarchiestufe gebildet wird,
    oder aus einem Tributary-Signal (STM-256/OC-768) der dritten Hierarchieebene gebildet wird,
    **daß** eine Frequenzanpassung (A1, A2, A3) zwischen den Transportsignalen (OTS1, OTS2) und/oder den Tributary-Signalen (STM-16/OC-48, STM-64/OC-192, STM-256/OC-768) und dem dritten Transportsignal (OTS3) erfolgt,
**daß** ein Optical Channel Overhead (OH3) gebildet wird und
**daß** eine FEC-Codierung durchgeführt wird.

**2.** Verfahren nach Anspruch 1,
**dadurch gekennzeichnet,**
**daß** in der ersten Hierarchiestufe eine erste Optical-Unit-Group (OUG-1) gebildet wird, die ein Tributary Signal (STM-16/OC-48) der ersten Hierarchiestufe umfaßt.

**3.** Verfahren nach Anspruch A2,
**dadurch gekennzeichnet,**
**daß** in der ersten Hierarchiestufe die erste Optical-Unit-Group (OUG-1) gebildet wird, die ein Tributary Signal (STM-16/OC-48) oder n (n = 2, 3, 4, ...) Datensignale (DS) umfaßt.

**4.** Verfahren nach Anspruch 1 bis 3,
**dadurch gekennzeichnet,**
**daß** die Payload (PLR) des Pulsrahmens 3808 Bytes umfaßt, der Overhead 16 Bytes und die FEC-Korrekturinformation 256 Bytes.

**5.** Verfahren nach einem der Ansprüche 1 bis 4,
**dadurch gekennzeichnet,**
**daß** zur Übertragung von einem Tributary Signal (STM-16, OC-48) in einem Transportsignal (OTS1) der ersten Hierarchieebene vier Stopfbytes zumindest annähernd gleichmäßig über die Payload (PLR) des Pulsrahmens (PR) verteilt eingefügt werden, die jeweils 7 Stopfinformationbits (C) und ein Stopfbit (S) enthalten.

**6.** Verfahren nach einem der Ansprüche 1 bis 4,
**dadurch gekennzeichnet,**
**daß** ein Positiv-Stopfverfahren zur Anpassung (A1, A1*) der Datenraten zwischen Tributary-Signalen (STM16, MDS) und dem Transportsignal (OTS1) durchgeführt wird.

**7.** Verfahren nach einem der Ansprüche 1 bis 4,
**dadurch gekennzeichnet**,
zur Übertragung von insgesamt vier Transportsignalen (OTS1) oder Tributary-Signalen (STM-16/OC-48) der ersten Hierarchieebene in einem Transportsignal (OTS2) der zweiten Hierarchieebene, die Transport- und/oder Tributary-Signale byteweise verschachtelt werden und

daß je Transport- oder Tributary-Signal (OTS1, STM16, OC-48) ein Stopfbyte (CS1 - CS4) eingefügt wird, das 7 Stopfinformationbits (Cx, x=1, 2, 3, ...) und 1 Stopfbit (S) beinhaltet und
daß eine Anpassung (A1, A2) an die Datenrate ($f_{OTS2}$) des Transportsignals (OTS2) durch ein Positiv-Stopfverfahren erfolgt.

**8.** Verfahren nach Anspruch 1, 2, 3 oder 4,
**dadurch gekennzeichnet**,
zur Übertragung eines Tributary-Signals (STM-64/OC-192) in einem Transportsignal (OTS2) der zweiten Hierarchieebene die Transport- und/oder Tributary-Signale byteweise verschachtelt werden und eine erste Anpassung (A2) der Datenraten durch Hinzufügen von vier Gruppen fester Stopfinformatiton (FS, FI) mit jeweils 39 Bits erfolgt,

daß außerdem vier zumindest annähernd gleich verteilte Stotpfbytes eingefügt werden, die jeweils 7 Stopfinformationbits (C) und ein Stopfbit (S) enthalten und
daß ein Positiv-Stopfverfahren zur Anpassung (A2) an die Datenrate ($f_{OTS2}$) des Transportsignals (OTS2) durchgeführt wird.

**9.** Verfahren nach Anspruch 1, 2, 3 oder 4,
**dadurch gekennzeichnet,**

**daß** zur Übertragung von insgesamt vier Transportsignalen (OTS2) oder vier Tributary-Signalen (STM-64/OC-192) einer zweiten Hierarchieebene in einem Transportsignal (OTS3) einer dritten Hierarchieebene die Transport- und/oder Tributary-Signale byteweise verschachtelt werden und

**daß** vier Stopfbytes (CS1, CS2, CS3, CS4) in den Pulsrahmen eingefügt werden, die jeweils 7 Stopfinformationbits (C) und ein Stopfbit (S) enthalten und
**daß** ein Positiv-Stopfverfahren zur Anpassung (A2, A3) an die Datenrate ($f_{OTS3}$) des Transportsignals (OTS3) durchgeführt wird.

10. Verfahren nach Anspruch 1, 2, 3 oder 4,
   **dadurch gekennzeichnet,**

   **daß** zur Übertragung von insgesamt 16 Transportsignalen (OTS1) oder 16 Tributary-Signalen (STM-16/OC-48) einer ersten Hierarchieebene in einem Transportsignal (OTS3) der dritten Hierarchieebene die die Transport- und/oder Tributary-Signale byteweise miteinander verschachtelt in den Pulsrahmen eingefügt werden,
   **daß** je Transport- oder Tributary-Signale eine erste feste Anpassung der Datenrate durch jeweils ein Stopfbyte (FI) erfolgt, daß 4 feste Stopfbytes (FSx) und vier Informationsbytes (Ix) aufweist und
   **daß** je Transport- oder Tributary-Signal ein Stopfbyte (CS1, CS2, CS3, ...) in den Pulsrahmen eingefügt wird, das 7 Stopfinformationbits (C) und ein Stopfbit (S) enthält, und
   **daß** ein Positiv-Stopfverfahren durchgeführt wird.

11. Verfahren nach Anspruch 1, 2, 3 oder 4,
   **dadurch gekennzeichnet,**

   **daß** zur Übertragung eines Tributary-Signals (STM-256/OC-768) der dritten Hierarchieebene in einem Transportsignal (OTS-3) der dritten Hierarchieebene eine erste Anpassung der Datenraten durch feste Stopfinformation von 314 Bits erfolgt, daß vier Stopfbytes (CS) eingefügt wurden, die jeweils 7 Stopfinformationbits (C) und ein Stopfbit (S) enthalten, und
   **daß** ein Positiv-Stopfverfahren zur Anpassung (A3) an die Datenrate ($f_{OTS3}$) des Transportsignals (OTS3) durchgeführt wird.

12. Verfahren nach einem der vorhergehenden Ansprüche,
   **dadurch gekennzeichnet,**
   **daß** die Frequenzanpassung beim Einfügen von Transportsignalen (OTS1, OTS2) oder Tributary-Signalen (MDS, STM16/OC-48, ... STM-256/OC768) in Transportsignale (OTS2, OTS3) einer höheren Hierarchieebene die Frequenzanpassung in mehreren Stufen erfolgt.

13. Verfahren nach Anspruch 12,
   **dadurch gekennzeichnet,**
   **daß** eine Frequenzanpassung durch das Einfügen fester Stopfinformation (FS, FI) erfolgt.

Fig. 1

Fig. 2

EP 1 170 892 A2

CS: C,C,C,C,C,C,C,S

**Fig. 4**

EP 1 170 892 A2

**Fig. 5**

4080 byte

PLR = 3808 byte

| 16 | 1 | 1 | 1 | 1 | 1 | 1 | 1 | 1 | 1 | | 256 |
|---|---|---|---|---|---|---|---|---|---|---|---|
| OH2 | CS1 | CS2 | CS3 | CS4 | I1 | I2 | I3 | I4 | I1 | .... PL | FEC |

CSx: Cx, Cx, Cx, Cx, Cx, Cx, Cx, Sx

**Fig. 6**

4080 byte

PLR = 3808 byte

| 16 | 1 | 4 | 1 | 946 | 1 | 4 | 1 | 946 | 1 | 4 | 1 | 946 | 1 | 4 | 1 | 946 | 256 |
|---|---|---|---|---|---|---|---|---|---|---|---|---|---|---|---|---|---|
| OH2 | CS | FS | FI | PL | CS | FS | FI | PL | CS | FS | FI | PL | CS | FS | FI | PL | FEC |

CS: C, C, C, C, C, C, C, S
FI: FS, FS, FS, FS, FS, FS, FS, I

**Fig. 7**

Fig. 8

4080 byte
PLR = 3808 byte

| 16 | | | | | | | | 256 |
| OH3 | C C C C | 1 1 1 1 | 1 1 1 1 | | | FEC |
| | S S S S | | | | PL | |
| | 1 2 3 4 | | | | | |

CSx: Cx, Cx, Cx, Cx, Cx, Sx    x = 1..4

**Fig. 9**

4080 byte
PLR = 3808 byte

| 16 | | | 256 |
| OH3 | C C C ... | | FEC |
| | S S S | | Payload |
| | 1 2 3 | | |

FIx: FSx, FSx, FSx, Ix, Ix, Ix, Ix    x = 1...16

CSx: Cx, Cx, Cx, Cx, Cx, Cx, Sx

**Fig. 10**

4080 byte
PLR = 3808 byte

| 16 | 9 | 1 | 941 | 1 | 10 | 941 | 1 | 10 | 941 | 1 | 10 | 941 | 1 | 10 | 256 |
| OH3 | C F S | | PL | C S | F S | PL | C S | F S | PL | C S | F S | PL | C S | F S | FEC |

FI: FS, FS, I, I, I, I, I, I    CS: C, C, C, C, C, C, C, S

**Fig. 11**

**Fig. 12**